# EUROPÄISCHE PATENTSCHRIFT

(11) **EP 0 433 481 B1**
(45) Veröffentlichungstag und Bekanntmachung des Hinweises auf die Patenterteilung: **16.02.1994**
(21) Anmeldenummer: 89123567.3
(22) Anmeldetag: 20.12.1989
(51) Int. Cl.: H04B 10/14

(54) **Verfahren zum bidirektionalen Übertragen elektrischer Signale über eine Lichtwellenleiteranordnung**
Method for bidirectionally transmitting optical signals over optical fiber conductors
Méthode de transmission bidirectionnelle de signaux électriques au moyen de conducteurs à fibres optiques

(43) Veröffentlichungstag der Anmeldung: 26.06.1991
(73) Patentinhaber: SIEMENS AKTIENGESELLSCHAFT, 80333 München (DE)
(72) Erfinder: Fronk, Gerhard, Dipl.-Ing. (FH), D-8520 Erlangen (DE); Krause, Reinhard, Dipl.-Ing. (FH), D-8551 Hemhofen (DE)

(56) Entgegenhaltungen:
- EP-A- 0 331 255
- FR-A- 2 614 158
- GB-A- 2 219 165
- PATENT ABSTRACTS OF JAPAN, Band 10, Nr. 158 (E-409)[2214], 6. Juni 1986 & JP-A-61 12 138
- PATENT ABSTRACTS OF JAPAN, Band 11, Nr. 275 (E-537)[2722], 5. September 1987 & JP-A-62 76 331

## Beschreibung

Die Erfindung bezieht sich auf ein Verfahren zum bidirektionalen Übertragen elektrischer Signale zwischen zwei elektrischen Baugruppen, wobei diese Signale jeweils von einer optischen Sendeeinheit in Lichtsignale gewandelt werden, die über eine die Übertragungsstrecke überbrückende Lichtwellenleiteranordnung geführt werden und von einer jeweils zugeordneten Empfangseinheit in elektrische Signale rückgeformt werden, wobei Mittel vorgesehen sind, um die optische Sendeleistung gemäß der jeweils vorliegenden Streckendämpfung einzustellen.

Die Übertragung von elektrischen Signalen nach Wandlung in Lichtsignale über Lichtwellenleiter hat sich für eine Vielzahl von technischen Anwendungen als ausgesprochen vorteilhaft erwiesen. Insbesondere die große Datenübertragungskapazität und die Unempfindlichkeit gegenüber elektromagnetischer Störstrahlung sind dabei wesentliche Gesichtspunkte.

Die jeweils zum Einsatz kommenden Lichtwellenleiter sowie die zugehörigen Koppelelemente weisen jedoch ein unterschiedliches Dämpfungsverhalten für die Lichtsignale auf, so daß stets eine Pegelanpassung für die optische Sendeleistung vorzunehmen ist. Eine Einrichtung dazu ist beispielsweise aus der DE-A-34 37 904 bekannt.

Bei einer derartigen Einrichtung, die gemäß einem Verfahren der eingangs genannten Art betrieben wird, ist jedoch die jeweilige Sendepegeleinstellung mit Hilfe eines Dämpfungsgliedes fest vorgegeben und läßt sich während des Betriebs nicht variieren. Es hat sich jedoch gezeigt, daß beispielsweise aufgrund von Alterungserscheinungen der Übertragungsstrecke oder der Koppelelemente eine fortlaufende Anpassung der optischen Sendeleistung an die Streckenverhältnisse wünschenswert wäre, damit zum einen sichergestellt ist; daß die jeweils erforderliche optische Sendeleistung für einen ordnungsgemäßen Empfang bereitsteht, damit jedoch zum anderen die Sendeeinrichtung nicht unnötig hoch belastet wird, so daß insbesondere das lichtemittierende Element nicht unnötig stark beansprucht wird.

Eine Einrichtung, die eine fortlaufende Anpassung der optischen Sendeleistung aufweist, ist aus der Patentschrift EP-A-0 331 255 bekannt.

Der Erfindung liegt die Aufgabe zugrunde, ein Verfahren der eingangs genannten Art so auszubilden, daß stets eine möglichst gute Anpassung der optischen Sendeleistung möglich ist.

Gemäß der Erfindung wird diese Aufgabe dadurch gelöst, daß jeder Empfangseinheit eine Pegelüberwachungseinrichtung zugeordnet ist, durch die beim Absinken des Pegels des Empfangssignals unterhalb eines vorgegebenen Grenzwertes eine Rückmeldung an die für das zugehörige Sendesignal verantwortliche Sendeeinrichtung ausgelöst wird, die dann eine Erhöhung der Sendeleistung für das im Pegel zu niedrige Empfangssignal anfordert, und daß dann, wenn innerhalb einer vorgegebenen Zeitspanne nicht die angeforderte Pegelerhöhung erfolgt, die Rückmeldung mit erhöhter Sendeleistung erneut abgesetzt wird. Gerade diese letztgenannte Maßnahme stellt sicher, daß, so lange es irgendwie möglich ist, die Rückmeldung noch erfolgreich abgesetzt werden kann, damit ein "dead lock" des Systems vermieden wird.

Eine vorteilhafte Ausbildung der Erfindung ist dadurch gekennzeichnet, daß zu vorgegebenen Zeitpunkten die jeweiligen Sendeleistungen stufenweise rücknehmbar sind. Dadurch wird sichergestellt, daß dann, wenn die optischen Übertragungsverhältnisse sich im Sinn einer niedrigeren Dämpfung verändert haben, die Sendeleistung dementsprechend wieder angepaßt wird.

Eine ausgesprochen einfache Art, nach der die Inbetriebsetzung der Gesamtanlage so erfolgt, daß für beide Übertragungseinrichtungen die jeweils optimalen Sendepegel erreicht werden, ist dadurch gekennzeichnet, daß während einer Initialisierungsphase zunächst in der einen Sendeeinheit ein Signal mit voller Leistung erzeugt wird derweil die zweite Sendeeinheit mit geringster Sendeleistung wirksam ist, daß dann diese Sendeleistung fortlaufend gesteigert wird, bis das hierdurch ausgelöste Empfangssignal in der der ersten Sendeeinheit zugeordneten Empfangseinheit einen ausreichenden Empfangspegel aufweist, und daß dann die Sendeleistung der ersten Sendeeinheit auf die jeweils geringste Leistung zurückgenommen wird und fortlaufend erhöht wird, bis in der der zweiten Sendeeinheit zugeordneten Empfangseinheit ein ausreichender Empfangspegel festgestellt wird.

Ein Ausführungsbeispiel der Erfindung ist in der Zeichnung dargestellt und wird im folgenden näher erläutert. Dabei zeigen:
- FIG 1: ein Blockschaltbild und
- FIG 2: ein Diagramm zur Inbetriebsetzung.

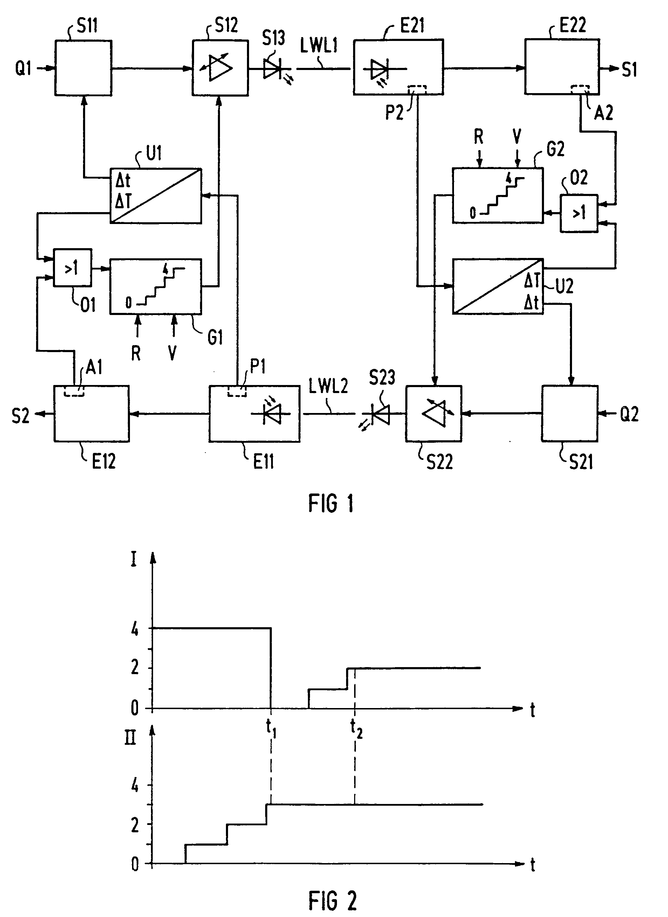

In der Darstellung gemäß FIG 1 ist in Form eines Blockschaltbildes gezeigt, wie über eine Lichtwellenleiteranordnung, bestehend aus Lichtwellenleitern LWL1 und LWL2 eine bidirektionale Datenübertragung erfolgt. Die zu übertragenden Daten werden dabei von Quellen Q1 und Q2 erzeugt und gelangen jeweils an eine Sendeeinrichtung, die aus einem Umsetzer S11, bzw.S21, einem Verstärker S12 bzw. S22 und einer Sendediode S13 bzw. S23 besteht. Der jeweilige Umsetzer S11 bzw. S21 dient dabei dazu, daß die jeweiligen Informationen von der Quelle Q1 bzw. Q2 in ein für die Übertragung auf den Lichtwellenleitern LWL1 und LWL2 angepaßtes elektrisches Signalmuster umgesetzt werden. Die Verstärker S12 und S22 nehmen dabei das Signal des jeweils zugeordneten Umsetzers S11 und S21 auf und verstärken dieses Signal entsprechend den Ausgangssignalen von Gebereinrichtungen G1 bzw. G2, auf deren Funktion im folgenden noch näher eingegangen wird. Das Ausgangssignal der Sendeeinrichtung S12 bzw. S21 gelangt dann an eine lichtemittierende Diode, die als Sendediode S13 bzw. S23 ein der zu übertragenden Information entsprechendes optisches Signal in den Lichtwellenleiter LWL1 bzw. LWL2 einspeist.

Der Lichtwellenleiter LWL1 bzw. LWL2 führt dann an eine Empfangseinrichtung, die jeweils aus einem Lichtsignalempfän ger E21 bzw. E11 und einem Umsetzer E22 bzw. E12 besteht. Die Empfangseinrichtung E21 bzw. E22 dient dabei dazu, aus dem Lichtsignal wieder ein elektrisches Signal zu generieren, wobei der Pegel dieses Signales durch jeweils zugeordnete Pegeldetektoren P2 bzw. P1 (auf das Einhalten von Sollwerten hin überwachbar) ist. Im weiteren gelangt das Ausgangssignal der Empfangseinrichtung E21 bzw. E22 dann an den jeweils zugeordneten Umsetzer U22 bzw. U12, der aus dem elektrischen Signal die jeweils zu übertragende Information rückgewinnt und diese an eine jeweilige Senke der Information S1 bzw. S2 leitet. Der Umsetzer E22 bzw. E12 weist dabei noch einen gestrichelt angedeuteten zusätzlichen Ausgang A2 bzw. A1 auf, der stets dann ein wirksames Signal logisch "1" führt, wenn von dem der Quelle Q1 bzw. der Quelle Q2 zugeordneten Sender ein Signal "Empfangspegel zu gering" abgesetzt wird.

Dieses Signal resultiert aus einem Ansprechen des Pegeldetektors P1 bzw. des Pegeldetektors P2. Dieses vom Pegeldetektor P1 bzw. Pegeldetektor P2 ermittelte Signal wird nämlich einem Umsetzer U1 bzw. U2 zugeleitet, der dann nach einer Verzögerungszeit delta t den Umsetzer S11 bzw. den Umsetzer S21 zum Abgeben der obengenannten Meldung anregt.

Sofern in dem der Senke S1 zugeordneten Empfänger am Ausgang A2 bzw. indem der Senke S2 zugeordneten Empfänger am Ausgang A1 das Signal "Sendepegel zu gering" anliegt, wird über ein ODER-Glied O2 bzw. O1 ein Geber G2 bzw. G1 wirksamgeschaltet, der dann, ausgehend von einer momentanen Stellung, diese um "1" erhöht, so daß beispielsweise beim Vorliegen einer Stellung 2 demzufolge auf eine Stellung 3 geschaltet wird. Abhängig von den Stellungen, z.B. 1 bis 4 des Gebers G2 bzw. G1 wird von diesem ein Ausgangssignal an den Verstärker S22 bzw. S12 geleitet, das dort eine Sendeleistung einstellt, die mit steigendem Wert der Position ebenfalls steigt.

Wenn also der Pegeldetektor P2 feststellt, daß das über den Lichtwellenleiter LWL1 ankommende Lichtsignal zu schwach ist, wird über den Umsetzer U2 der Umsetzer S21 aktiviert. Dieser löst ein Signal "Empfangsleistung zu gering" aus, überträgt dies über den Lichtwellenleiter LWL2 zum Umsetzer E12, dieser detektiert das Signal "Empfangsleistung zu gering" und dementsprechend wird der Ausgang A1 aktiv. Über das ODER-Glied O1 wird dann der Geber G1 um eine Stufe höher geschaltet. Demzufolge wird auch der Verstärker S12 um eine Stufe hochgefahren und das im Lichtsignalempfänger E21 dann ankommende Signal müßte dann im weiteren mit höherer Intensität ankommen. Entsprechendes gilt für die andere Übertragungsrichtung.

Es ist nun jedoch denkbar, daß beim obengenannten Beispiel sich auch die Übertragungsverhältnisse auf dem Lichtwellenleiter LWL2 verschlechtert haben könnten. Aus diesem Grunde ist der Umsetzer U2 bzw. U1 so ausgebildet, daß dann, wenn der Pegeldetektor P2 bzw. P1 über längere Zeiträume anspricht, d.h. über eine Verzögerungszeit delta T, hinaus die größer als die Verzögerungszeit delta t ist, über das ODER-Glied O2 bzw. das ODER-Glied O1 der Geber G2 bzw. den Geber G1 hochgeschaltet wird, damit ein Rückmeldesignal "Pegel zu gering" mit möglichst großer Sicherheit rückübertragen wird. Dieses Hochschalten kann dabei stufenweise bis zur Höchstleistung der Sendediode S23 bzw. S13 vorgenommen werden.

Da es durchaus möglich ist, daß die Streckenübertragungsverhältnisse sich nur jeweils kurzfristig verschlechtern und dann wieder eine Verbesserung eintritt, ist es auch möglich, die Gebereinrichtung G2 bzw. G1 über Rücksetzeingänge R noch einmal rückzunehmen und dann beispielsweise in einer Initialisierungsphase eine Optimierung der Sendepegel vorzunehmen. Ferner wäre es auch möglich, über Voreinstelleingänge V die jeweiligen Stufen der Geber G2 bzw. G1 vorzugeben.

Wie eine obengenannte Initialisierung erfolgen könnte, ist in der Darstellung gemäß FIG 2 gezeigt.

In der Darstellung gemäß FIG 2 sind zwei Diagramme dargestellt, von denen das obere Diagramm I den zeitlichen Verlauf der Sendeleistung der Sendediode S13 angeben möge und das untere Diagramm II die Sendeleistung der Sendediode S23.

Für die Initialisierung wird zunächst die Sendediode S13 auf den jeweils maximalen Wert, im Ausführungsbeispiel "4" eingestellt. Die Sendeleistung für die Sendediode S23 wird zur gleichen Zeit t auf die geringstmögliche Leistung eingestellt. Dies führt dazu, daß der Pegeldetektor P1 feststellt, daß das Empfangssignal zu gering ist und dementsprechend solange Erhöhungen anfordert, bis die in der Empfangseinrichtung E11 ankommende Lichtsignalleistung ausreichend groß ist. Dies möge beispielsweise zum Zeitpunkt t₁ erfolgen. Durch eine gestrichelte Linie ist den Diagrammen I und II dieser Umstand angedeutet. Sobald demzufolge die Übertragungsverhältnisse über den Lichtwellenleiter LWL2 optimiert sind, wird die Sendeleistung der Sendediode S13 auf den geringstmöglichen Wert zurückgenommen. Demzufolge muß dann der Pegeldetektor P2 ansprechen und eine Erhöhung der Sendeleistung der Sendediode S13 über den bereits optimierten Lichtwellenleiter LWL2 auslösen. Dies erfolgt solange, bis beispielsweise zu einem Zeitpunkt t₂ die am Lichtsignalempfänger E21 anstehende Lichtsignalleistung ausreichend groß ist.

## Patentansprüche

1. Verfahren zum bidirektionalen Übertragen elektrischer Signale zwischen zwei elektrischen Baugruppen, wobei diese Signale jeweils von einer optischen Sendeeinheit (S13,S23) in Lichtsignale gewandelt werden, die über eine die Übertragungsstrecke überbrückende Lichtwellenleiteranordnung (LWL1,LWL2) geführt werden und von einer jeweils zugeordneten Empfangseinheit (E21,E11) in elektrische Signale rückgeformt werden, wobei die optische Sendeleistung gemäß der jeweils vorliegenden Streckendämpfung eingestellt wird, und wobei jeder Empfangseinheit (E11,E12 bzw.E21,E22) eine Pegelüberwachungseinrichtung (P1, P2) zugeordnet ist, durch die beim Absinken des Pegels des Empfangssignals unterhalb eines vorgegebenen Grenzwertes eine Rückmeldung an die für das zugehörige Sendesignal verantwortliche Sendeeinrichtung (S21,S22 bzw.S11,S12) ausgelöst wird, die dann eine Erhöhung der Sendeleistung für das im Pegel zu niedrige Empfangssignal anfordert, **dadurch gekennzeichnet,** daß dann, wenn innerhalb einer vorgegebenen Zeitspanne (delta T) nicht die angeforderte Pegelerhöhung erfolgt, die Rückmeldung mit erhöhter Sendeleistung erneut abgesetzt wird.

2. Verfahren nach Anspruch 1, **dadurch gekennzeichnet,** daß zu vorgegebenen Zeitpunkten die jeweiligen Sendeleistungen stufenweise rücknehmbar sind.

3. Verfahren nach Anspruch 1 oder 2, **dadurch gekennzeichnet,** daß während einer Initialisierungsphase zunächst in der einen Sendeeinheit (S11,S12,S13) ein Signal mit voller Leistung erzeugt wird, derweil die zweite Sendeeinheit (S21,S22,S23) mit geringster Sendeleistung wirksam ist, daß dann diese Sendeleistung fortlaufend gesteigert wird, bis das hierdurch ausgelöste Empfangssignal in der der ersten Sendeeinheit zugeordneten Empfangseinheit (E11,E12) einen ausreichenden Empfangspegel aufweist, und daß dann die Sendeleistung der ersten Sendeeinheit auf die jeweils geringste Leistung zurückgenommen wird und fortlaufend erhöht wird, bis in der der zweiten Sendeeinheit zugeordneten Empfangseinheit ein ausreichender Empfangspegel festgestellt wird.

## Claims

1. Method for the bidirectional transmission of electrical signals between two electrical assemblies, by which these signals are transformed, in each case, by an optical transmitting unit (S13, S23) into light signals which are guided by way of an optical waveguide arrangement (LWL1, LWL2) bridging the transmission path and are formed back into electrical signals by a respectively associated receiving unit (E21, E11), by which the optical transmitting power is adjusted according to the respective path attenuation which exists, and by which there is associated with each receiving unit (E11, E12 and E21, E22 respectively) a level-monitoring device (P1, P2) by means of which, when the level of the receive signal drops below a given limiting value, a check-back signal is released to the transmitting device (S21, S22 and S11, S12 respectively) responsible for the associated send signal, which transmitting device then requests an increase in the transmitting power for the receive signal, the level of which is too low, characterised in that when the requested level increase does not occur within a given time interval (delta T), the check-back signal is transmitted again with increased transmitting power.

2. Method according to claim 1, characterised in that the respective transmitting powers can be withdrawn in stages at given instants.

3. Method according to claim 1 or 2, characterised in that during an initialisation phase in the first instance a signal is generated with full power in the one transmitting unit (S11, S12, S13) whilst the second transmitting unit (S21, S22, S23) is effective with the minimum transmitting power, in that then this transmitting power is raised continuously until the receive signal released thereby has an adequate receiving level in the receiving unit (E11, E12) associated with the first transmitting unit and in that then the transmitting power of the first transmitting unit is taken back to the minimum power in each case and is increased continuously until an adequate receiving level is established in the receiving unit associated with the second transmitting unit.

## Revendications

1. Procédé de transmission bidirectionnelle de signaux électriques entre deux modules électriques, selon lequel ces signaux sont convertis respectivement par des unités d'émission optique (S13,S23) en des signaux lumineux, qui passent dans un dispositif (LWL1, LWL2) formant guide d'ondes lumineuses et recouvrant la voie de transmission, et qui sont ramenés, par des unités de réception respectivement associées (E21,E11), sous la forme de signaux électriques, et selon lequel la puissance optique d'émission est réglée en fonction de l'affaiblissement de voie prévu, et selon lequel à chaque unité de réception (E11,E12 ou E21,E22) est associé un dispositif de contrôle de niveau (P1,P2), qui, lorsque le niveau du signal de réception diminue en-dessous d'une valeur limite prédéterminée, déclenche l'envoi d'une signalisation en retour au dispositif d'émission (S21,S22 ou S11,S12), qui est responsable du signal d'émission associé, signalisation qui demande alors une augmentation de la puissance d'émission pour le signal de réception dont le niveau est trop faible, caractérisé par le fait que lorsque l'augmentation demandée de niveau n'intervient pas au cours d'un intervalle de temps prédéterminé (delta T), la signalisation en retour est à nouveau appliquée avec une puissance d'émission augmentée.

2. Procédé suivant la revendication 1, caractérisé par le fait que les puissances d'émission respectives peuvent être réduites d'une manière échelonnée, à des instants prédéterminés.

3. Procédé suivant la revendication 1 ou 2, caractérisé par le fait que pendant une phase d'initialisation, un signal à pleine puissance est produit tout d'abord dans la première unité d'émission (S11,S12,S13), qu'entre-temps la seconde unité d'émission (S21,S22,S23) ayant la puissance d'émission minimale est activée, qu'ensuite la puissance d'émission est augmentée de façon continue jusqu'à ce que le signal de réception déclenché de ce fait présente, dans l'unité de réception (E11,E12) associée à la première unité d'émission, un niveau de réception suffisant et qu'ensuite la puissance d'émission de la première unité d'émission est réduite à la puissance respectivement la plus faible et est augmentée de façon continue jusqu'à ce qu'un niveau de réception suffisant soit établi dans l'unité de réception associée à la seconde unité d'émission.
